Europäisches Patentamt

European Patent Office

Office européen des brevets

(19)

(11) **EP 0 693 240 B1**

(12) **EUROPÄISCHE PATENTSCHRIFT**

(45) Veröffentlichungstag und Bekanntmachung des Hinweises auf die Patenterteilung:
**16.12.1998 Patentblatt 1998/51**

(21) Anmeldenummer: **94910351.9**

(22) Anmeldetag: **19.03.1994**

(51) Int Cl.⁶: **H04L 25/30**

(86) Internationale Anmeldenummer:
**PCT/DE94/00305**

(87) Internationale Veröffentlichungsnummer:
**WO 94/24798 (27.10.1994 Gazette 1994/24)**

(54) **KALMAN-FILTER ZUR KANALSTOSSANTWORTADAPTION IN EMPFÄNGERN FÜR TDMA-MOBILFUNKSYSTEME**

KALMAN FILTER FOR CHANNEL PULSE RESPONSE ADAPTATION IN RECEIVERS FOR TDMA MOBILE RADIO SYSTEMS

FILTRE DE KALMAN PERMETTANT D'ADAPTER LA REPONSE IMPULSIONNELLE DE VOIE DANS DES RECEPTEURS POUR SYSTEMES RADIOTELEPHONIQUES MOBILES AMRT

(84) Benannte Vertragsstaaten:
**FR**

(30) Priorität: **08.04.1993 DE 4311655**

(43) Veröffentlichungstag der Anmeldung:
**24.01.1996 Patentblatt 1996/04**

(73) Patentinhaber: **ROBERT BOSCH GMBH**
**70442 Stuttgart (DE)**

(72) Erfinder: **HAGMANNS, Franz-Josef**
**D-71522 Backnang (DE)**

(56) Entgegenhaltungen:
**EP-A- 0 520 969        EP-A- 0 524 597**

- **Fifth European Signal Processing Conference, 18-21/9/1990, Barcelona, ES; Elsevier, Amsterdam, NL, 1990; Zeiten 225-228, Morgül & Dzung: "New optimum recursive parameter estimation/detection using unreliable erasure declaring detectors"**

**Beschreibung**

1. HINTERGRUND DER ERFINDUNG

Die Erfindung bezieht sich auf das Problem der adaptiven Datendetektion in einem Mobilfunkempfänger. "Adaptiv" bedeutet, daß im Empfänger eine Einrichtung vorgesehen ist, die die zeitlichen Änderungen der Eigenschaften des Mobilfunkkanals nachvollziehen kann. Solche Einrichtungen arbeiten meist nach dem LMS- (Least Mean Squares) (siehe z.B. [1]) oder dem RLS-(Recursive Least Squares) (siehe z.B. [2]) Algorithmus. Diese Algorithmen adaptieren die Eigenschaften des Übertragungskanals kontinuierlich mit der Zeit.

In der EP-A- 520 969 ist ein Schätzverfahren für die Datendetektion angegeben, bei dem empfangene Abtastwerte eines Zeitschlitzes zunächst beginnend mit dem zuerst empfangenen Wert gespeichert und verarbeitet werden, und zwar bis über einen Fadingeinbruch hinaus; dann erfolgt eine weitere Bearbeitung beginnend mit dem zuletzt gespeicherten Abtastwert, um Schätzwerte der gesendeten Daten zu erzeugen.

In Fifth European Signal Processing Conference, 18-21/9/1990, Barcelona, ES; Elsevier, Amsterdam, NL, 1990; Seiten 225-228, Morgül & Dzung: "New optimum recursive parameter estimation/detection using unrelieable erasure declaring detectors" ist ein Kalman-Filter zur Adaption der Kanalstoßantwort in einem Mobilfunk-Empfänger beschrieben. Dabei wird der Kalman-Algorithmus nur auf die zu einem bestimmten Zeitpunkt vorliegende Kanalstoßantwort angewendet.

In der vorliegenden Patentanmeldung wird dargelegt daß die kontinuierlich mit der Zeit adaptierenden Algorithmen unter gewissen, für den Mobilfunk typischen, Bedingungen versagen.

Der Grund dafür ist, daß solche Adaptionsalgorithmen als zeitvariante rekursive Filter erster Ordnung angesehen werden können. Ein prinzipiell besseres Verhalten zeigen Algorithmen höherer Ordnung.

Bild 1 zeigt die Struktur von Daten, die in einem Mobilfunksystem burstweise übertragen werden.

Bild 2 ist ein Blockschaltbild der Übertragungsstrecke

Bild 3 stellt die Einteilung eines TDMA-Bursts in Sektoren dar.

Bild 4 zeigt einen Fading-Einbruch in einem TDMA-Burst.

Bild 5 stellt ein Prozeßmodell zur Kalman-Theorie dar.

**2.1 Modell des Übertragungssystems**

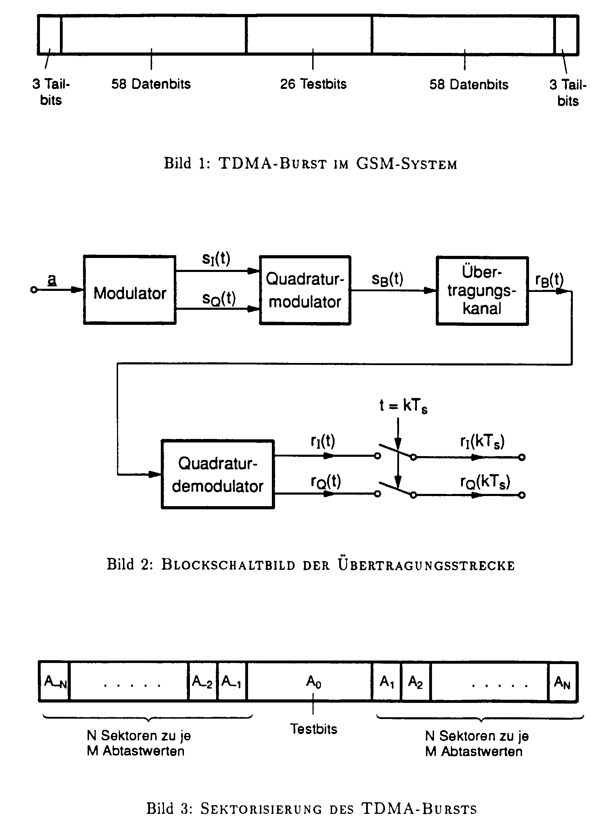

In digitalen TDMA-Mobilfunksystemen werden die Daten burstweise übertragen. Im GSM-System werden z.B. 116 Datenbits zu einem Burst zusammengefaßt. Die dazu gewählte Burststruktur ist im **Bild 1** dargestellt. Neben den 116 Datenbits, die in zwei Abschnitten zu je 58 Bits gruppiert sind, enthält der Burst noch an den Enden je 3 sogenannte "Tailbits" und in der Mitte eine sogenannte Testsequenz, bestehend aus 26 Bits, so daß der Burst aus insgesamt 148 Bits besteht.

Die Testsequenz dient zum "Ausmessen" des Übertragungskanals. Dieser läßt sich als lineares zeitvariantes Filter beschreiben [4], das Ausmessen des Übertragungskanals ist damit gleichbedeutend mit einer Schätzung der Kanalstoßantwort.

Ein Maß für die Änderungsgeschwindigkeit des Kanals ist die sogenannte Dopplerfrequenz

$$f_d = f_0 \frac{v}{c}.$$

Darin ist $f_0$ die Trägerfrequenz des gesendeten Signales, $v$ die Geschwindigkeit des mobilen Teilnehmers und $c$ die Lichtgeschwindigkeit. Die Länge eines Bursts ist so gewählt, daß, trotz der möglichen Änderungen, die Kanalstoßantwort während eines Bursts als nahezu konstant angesehen werden kann. Bei GSM gilt diese Annahme für Geschwindigkeiten $v$ bis etwa 250 km/h (die Trägerfrequenz $f_0$ liegt bei 900 MHz, die Burstdauer ist rund 546 μs).

Das erfindungsgemäße Verfahren setzt eine Burstübertragung ähnlich wie bei GSM voraus. Insbesondere ist das Vorhandensein einer Testsequenz in der Mitte des Bursts bedeutsam.

Die für die Definition der Signale wichtigen Teile von Sender und Empfänger sind im **Bild 2** dargestellt. Der Modulator bildet die zu übertragende Datensequenz $\underline{a}$ in das Signal $s(t)$ ab. Es wird angenommen, daß $s(t)$ ein komplexwertiges Tiefpaßsignal mit den Quadraturkomponenten $s_I(t)$ und $s_Q(t)$ ist, d.h.

$$s(t) = s_I(t) + js_Q(t).$$

Dabei ist $j = \sqrt{-1}$ die imaginäre Einheit. Ferner wird angenommen, daß $W_s$ die Bandbreite des Signales ist. $s(t)$ kann daher nach dem Abtasttheorem eindeutig durch die Abtastwerte $s(kT_s)$ mit $T_s = 1/W_s$ repräsentiert werden. $s(t)$ wird durch den Quadraturmodulator in das HF-Signal

$$s_B(t) = \mathrm{Re}\left\{ s(t)e^{j2\pi f_0 t} \right\} = s_I(t)\cos 2\pi f_0 t - s_Q(t)\sin 2\pi f_0 t$$

abgebildet, wobei $f_o$ die gewünschte Trägerfrequenz ist. $s_B(t)$ wird gegebenenfalls weiter verstärkt und über die Antenne abgestrahlt.

$r_B(t)$ sei das HF-Empfangssignal, dem, wie $s_B(t)$, gemäß

$$r_B(t) = \mathrm{Re}\left\{ r(t)e^{j2\pi f_0 t} \right\} = r_I(t)\cos 2\pi f_0 t - r_Q(t)\sin 2\pi f_0 t$$

ein komplexwertiges Tiefpaßsignal

$$r(t) = r_I(t) + jr_Q(t)$$

zugeordnet werden kann. Der Quadraturdemodulator auf Empfängerseite dient der Gewinnung dieses Signales. $r(t)$ ist wie $s(t)$ ein Tiefpaßsignal der Bandbreite $W_s$; $r(t)$ kann daher ebenfalls durch seine Abtastwerte $r(kT_s)$ repräsentiert werden.

Im Mobilfunk nimmt man an, daß zwischen den Empfangssignal- und Sendesignalabtastwerten die Beziehung

$$r(kT_s) = \sum_l h(l, kT_s)s((k-l)T_s) + n(kT_s)$$

besteht. Die Summe beschreibt eine zeitdiskrete Faltung; $h(l, kT_s)$ ist der $l$-te Koeffizient der (zeitvarianten) Kanalstoßantwort zum Zeitpunkt $t = kT_s$. $n(kT_s)$ symbolisiert eine zusätzliche Störkomponente; im Mobilfunk setzt diese sich gewöhnlich aus thermischem Rauschen und Signalen von Fremdsendern zusammen. Im folgenden wird angenommen, daß diese Störkomponente mittelwertfrei und gaußverteilt ist und die Korrelationseigenschaften

$$\langle n(kT_s)n^\star(lT_s)\rangle = \sigma^2 \delta_{kl}$$

hat. $\langle x\rangle$ wird allgemein als Notation für den Erwartungswert der Zufallsvariablen $x$ verwendet.

In den folgenden Betrachtungen wird die Zeitkonstante $T_s$ stets aus der Notation weggelassen; ferner wird angenommen, daß die Kanalstoßantwortkoeffizienten nur für $l = 0,..., L - 1$ von 0 verschieden sind. Die obige Beziehung zwischen Empfangssignal- und Sendesignalabtastwerten lautet dann

$$r(k) = \sum_{l=0}^{L-1} h(l, k)s(k-l) + n(k). \tag{1}$$

Zur Vereinfachung der Notation werden die Kanalstoßantwortkoeffizienten zur Zeit $kT_s$ zu dem Vektor

$$\underline{h}(k) = (h(0,k),...,h(L\text{-}1,k))^T$$

zusammengefaßt. Zur Notation: mehrdimensionale Größen wie Vektoren und Matrizen werden durch einen Unterstrich gekennzeichnet. Der erste Summand in Gleichung (1) kann als Nutzanteil, der zweite als Störanteil des Empfangssignales bezeichnet werden.

### 2.2 Allgemeines Prinzip der Detektion

Zur Beschreibung des erfindungsgemäßen Verfahrens ist von Bedeutung, daß zur Ermittlung der gesendeten Daten die Kanalstoßantwort im Empfänger bekannt sein muß. Dies folgt unmittelbar aus Gleichung (1). Angenommen, das Rauschsignal wäre nicht vorhanden, d.h. $n(k) = 0$, dann wäre das Empfangssignal nur vom Sendesignal und der Kanalstoßantwort abhängig. Kennt man daher Empfangssignal und Kanalstoßantwort, dann kann man (1) nach dem Sendesignal auflösen und anschließend durch Inversion der Modulation die gesendeten Daten ermitteln. Umgekehrt gilt: kennt man die Daten, dann kann man (1) nach der Kanalstoßantwort auflösen. Ist $n(k) \neq 0$, dann kann man keine direkte Auflösung von (1) nach $s(k\text{-}l)$ oder $h(l,k)$ vornehmen; trotzdem gilt auch hier, daß zur Ermittlung des Sendesignales die Kanalstoßantwort bekannt sein muß und umgekehrt. Bedingt durch das nichtverschwindende Rauschen $n(k)$ sind die ermittelten Werte für die Daten bzw. der Kanalstoßantwort Schätzwerte.

Das allgemeine Prinzip der Detektion kann jetzt wie folgt beschrieben werden. Man teilt den empfangenen Burst in $2N + 1$ Sektoren $A_i$, $-N \leq i \leq +N$, ein, die nicht notwendigerweise die gleiche Länge haben müssen. Die Länge der Sektoren sei aber so gewählt, daß man eine Konstanz der Kanalstoßantwort innerhalb eines Sektors annehmen kann. Der Sektor $A_0$ sei identisch mit der Testsequenz. Eine solche Sektorisierung ist im **Bild 3** dargestellt.

Da die Testsequenz bekannt ist, kann für den Sektor $A_0$ die Kanalstoßantwort bestimmt werden. Da sich die Kanalstoßantworten in benachbarten Sektoren nur wenig voneinander unterscheiden, können mit Hilfe des Kanalstoßantwortschätzwertes im Sektor $A_0$ die Daten der Sektoren $A_{-1}$ und $A_{+1}$ ermittelt werden. Mit diesen Daten können jetzt die Kanalstoßantworten dieser Sektoren geschätzt werden. Diese werden dann wiederum für die Datendetektion der Sektoren $A_{-2}$ und $A_{+2}$ verwendet usw.

Die Schätzung der Kanalstoßantwort im Sektor $A_i$, $i > 0$, wird man nicht nur auf die in diesem Sektor detektierten Daten basieren, sondern auch z.B. auf die Kanalstoßantwort im Sektor $A_{i\text{-}1}$. Der Grund dafür ist, daß sich die Kanalstoßantworten von Sektor zu Sektor nur wenig ändern; die Kanalstoßantworten der einzelnen Sektoren sind stark miteinander korreliert.

Die Idee zu dieser Patentanmeldung besteht im wesentlichen aus der Erkenntnis, daß die Korrelationen der Kanalstoßantwortkoeffizienten möglichst weitgehend ausgenutzt werden sollen, d.h. bei der Ermittlung der Kanalstoßantwort für den Sektor $A_i$ sollen alle Kanalstoßantworten der bereits bearbeiteten Sektoren berücksichtigt werden. Dies ist aber nur dann sinnvoll, wenn die Kanalstoßantwortschätzwerte der bereits bearbeiteten Sektoren auch zuverlässig sind. Aus diesem Grund sollte die Bearbeitung des Bursts beginnend mit dem zuverlässigsten Sektor in Richtung abnehmender Zuverlässigkeit ausgeführt werden (siehe [5]).

### 2.3 Vorbekannte Lösungen

Die bekanntesten Verfahren für die Kanalstoßantwortadaption sind der LMS- und der RLS-Algorithmus. In beiden Fällen bestehen die Sektoren außerhalb der Testsequenz aus nur je einem Signalabtastwert. $\hat{\underline{h}}(i)$ sei der Kanalstoßantwortschätzwert für den $i$-ten Sektor. Für $i > 0$ berechnen beide Algorithmen

$$\hat{\underline{h}}(i) = \underline{h}(i\text{-}1) + \underline{P}(i)\,d(i). \tag{2}$$

Darin ist $\underline{P}(i)$ ein Vektor der gleichen Dimension wie $\hat{\underline{h}}(i)$ und

$$d(i) = r(i) - \hat{r}(i) \tag{3}$$

der Fehler zwischen dem tatsächlichen Empfangssignal $r(i)$ und der Empfangssignalnachbildung

$$\hat{r}(i) = \sum_{l=0}^{L-1} \hat{h}(l, i - 1) s(i - l). \tag{4}$$

Gleichung (2) beschreibt, daß $\hat{\underline{h}}(i)$ nur von $\hat{\underline{h}}(i\text{-}1)$, also der geschätzten Kanalstoßantwort im vorangegangenen Sektor, abhängig ist. Die detektierten Daten werden zur Berechnung des Fehlers $d(i)$ benötigt.

Diese Betrachtungen gelten sowohl für den LMS- als auch für den RLS-Algorithmus. Der Unterschied zwischen beiden Algorithmen besteht in der Wahl von $\underline{P}(i)$. Da jeder neue Kanalstoßantwortschätzwert nach (2) nur von dem unmittelbar vorangegangen abhängt, kann man (in Analogie zur Theorie rekursiver zeitdiskreter Filter) von Algorithmen ersten Ordnung sprechen.

Die Zeitrichtung in der Adaptionsgleichung (2) kann umgedreht werden. Man erhält dann

$$\hat{\underline{h}}(i) = \hat{\underline{h}}(i+1) + \underline{P}(i)d(i). \tag{5}$$

Dies ist für die Bearbeitung der Sektoren $A_i$ mit $i < 0$ von Bedeutung.

Algorithmen erster Ordnung versagen unter zwei Bedingungen.

1. Ist der Schätzwert für die Kanalstoßantwort im Sektor $A_{i-1}$ völlig falsch, dann ist auch die Datendektion im Sektor $A_i$ fehlerhaft, da diese gerade mit der geschätzten Kanalstoßantwort des Sektors $A_{i-1}$ ausgeführt wird. Da der Schätzwert für die Kanalstoßantwort im Sektor $A_i$ nur von $\hat{\underline{h}}(i\text{-}1)$ und den Daten des Sektors $A_i$ abhängt, wird dieser auch vollkommen falsch sein. Eine Fehlschätzung der Kanalstoßantwort im Sektor $A_{i-1}$ führt daher mit hoher Wahrscheinlichkeit zu einer Fehlschätzung der Kanalstoßantwort im Sektor $A_i$.

2. Sind die Komponenten des Kanalstoßantwortvektors im Sektor $A_i$ so klein, daß der Nutzanteil des Empfangssignales klein gegenüber dem Störanteil ist, dann wird die Datendetektion in diesem Sektor mit hoher Wahrscheinlichkeit fehlerhaft sein. Aus den Gleichungen (2), (3) und (4) folgt dann, daß die Änderung der Kanalstoßantwort vom Sektor $A_{i-1}$ zum Sektor $A_i$ nicht nachvollziehbar ist; die geschätzte Änderung wird vielmehr völlig zufällig sein. Daraus und aus der geringen Größe der Komponenten von $\underline{h}(i)$ folgt, daß der Schätzwert $\hat{\underline{h}}(i)$ mit großer Wahrscheinlichkeit völlig falsch ist.

Aus diesen beiden Punkten folgt, daß die Algorithmen erster Ordnung eine Adaption durch einen Fading-Einbruch hindurch nicht erlauben. Unter einem Fading-Einbruch versteht man eine Situation, in der die Kanalstoßantwortkoeffizienten so kleine Werte annehmen, daß der Nutzanteil des Empfangssignales im Rauschen verschwindet. Angenommen, der Sektor $A_{i-1}$ wäre von einem Fading-Einbruch betroffen. Aus dem zweiten Punkt folgt nun, daß der Schätzwert für die Kanalstoßantwort im Sektor $A_i$ mit hoher Wahrscheinlichkeit stark fehlerbehaftet sein wird. Aus dem ersten Punkt folgt dann, daß dies auch für alle weiteren Sektoren $A_{i+1}$, $A_{i+2}$ usw. gilt.

Tritt ein Fading-Einbruch in einem Datenabschnitt auf, dann sind die Daten hinter (von der Testsquenz aus gesehen) diesem Fading-Einbruch nicht mehr detektierbar. Die Wahrscheinlichkeit eines solchen Fading-Einbruches steigt mit der Fahrzeuggeschwindigkeit. Dies ist der Grund warum Algorithmen erster Ordnung bei hohen Fahrzeuggeschwindigkeiten versagen. Im GSM-System gilt diese Aussage für Fahrzeuggeschwindigkeiten oberhalb etwa 250 km/h.

### 2.4 Kanalstoßantwortadaption mit Hilfe eines Kalman-Filters

Die Möglichkeit zur Adaption der Kanalstoßantwort durch einen Fading-Einbruch hindurch ist Voraussetzung für eine zuverlässige Mobilkommunikation bei sehr hohen Fahrzeuggeschwindigkeiten. Anwendungsbeispiele hierfür sind schnellfahrende Züge, für die Geschwindigkeiten bis zu 500 km/h diskutiert werden. Das GSM-System wurde zunächst für Fahrzeuggeschwindigkeiten bis etwa 250 km/h konzipiert. Eine Verwendung der GSM-Standards beim Bahnmobilfunk ist nur dann möglich, wenn die Methoden zur Kanalstoßantwortadaption und insbesondere ihre Fähigkeit zur Adaption der Kanalstoßantwort durch einen Fading-Einbruch hindurch signifikant verbessert werden können.

Eine signifikante Verbesserung der Kanalstoßantwortadaption ist nur durch Algorithmen höherer Ordnung möglich. Bei solchen Algorithmen ist der Schätzwert $\underline{\hat{h}}(k)$ nicht nur von $\hat{\underline{h}}(k\text{-}1)$ (bzw. $\hat{\underline{h}}(k+1)$ bei der Rückwärtsadaption) abhängig, sondern von möglichst vielen bereits ermittelten $\hat{\underline{h}}(k+n)$, $n \neq 0$. Dies ermöglicht ein verbessertes Ausnutzen der Korrelationen der Kanalstoßantworten zu unterschiedlichen Zeiten.

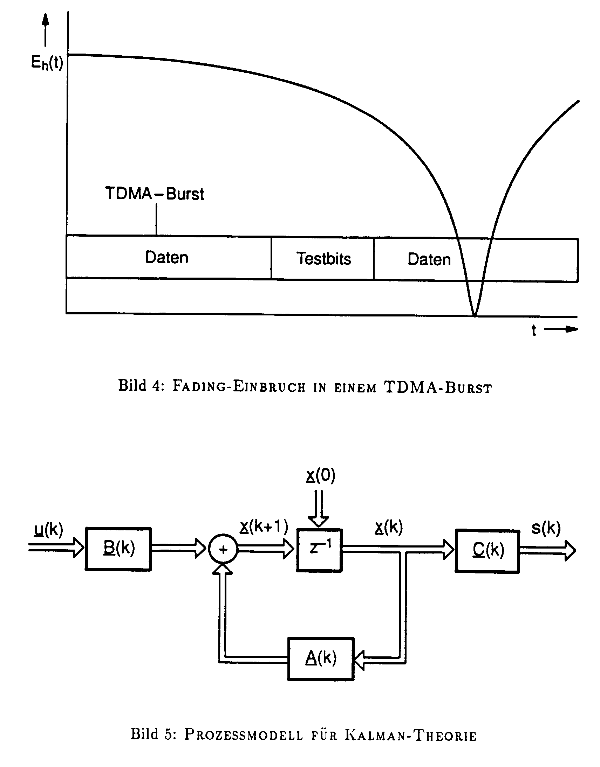

*Beispiel:* Gegeben sei die im **Bild 4** dargestellte Situation.

$$E_h(t) = \sum_{l=0}^{L-1} |h(l,t)|^2$$

ist die Energie der Kanalstoßantwort zur Zeit $t$. Etwa in der Mitte des zweiten Datenabschnittes ist ein Fading-Einbruch zu erkennen. Bei Verwendung eines Algorithmus erster Ordnung, der nicht durch diesen Fading-Einbruch hindurch adaptieren kann, wären die Datenbits am Ende des zweiten Datenabschnittes nicht mehr detektierbar. Da die Kanalstoßantwortkoeffizienten zu beiden Seiten des Fading-Einbruches jedoch miteinander korreliert sind, ist es durchaus möglich, von den geschätzten Kanalstoßantworten zur linken Seite auf die zur rechten Seite des Fading-Einbruches zu schließen. Dazu sollte jedoch gewährleistet sein, daß der Kanalstoßantwortverlauf zur linken Seite des Fading-Einbruches vollständig bekannt ist, bevor der zur rechten Seite zu ermitteln versucht wird. Es ist also eine Einrichtung vorzusehen, die zunächst alle zuverlässigen Datenabschnitte, d.h. Datenabschnitte, die nicht von einem Fading-Einbruch betroffen sind, zur Detektion vorsieht bevor ein betroffener Abschnitt bearbeitet wird (siehe [5]).

Vor der Beschreibung des eigentlichen Verfahrens sei zunächst eine kurze Zusammenfassung der Theorie der Kalman-Filter erlaubt. Das der Kalman-Theorie zugrunde liegende Prozeßmodell ist ein vektorielles sequentielles Zustandsmodell (siehe **Bild 5**). $\underline{x}(k)$ ist der Zustandsvektor, $\underline{u}(k)$ der Steuervektor und $\underline{y}(k)$ der Ausgabevektor jeweils beim Rekursionsschritt $k$. Das Prozeßmodell besagt, daß der Zustandsvektor beim Rekursionsschritt $k+1$ linear vom Zustandsvektor und Steuervektor beim Rekursionsschritt $k$ abhängt, d.h.

$$\underline{x}(k+1) = \underline{A}(k)\underline{x}(k) + \underline{B}(k)\underline{u}(k). \tag{6}$$

Die lineare Abbildung wird durch die Matrizen $\underline{A}(k)$ und $\underline{B}(k)$ beschrieben, die i.A. vom Rekursionsschritt abhängen. Der Ausgabevektor ist linear vom Zustandsvektor abhängig,

$$\underline{y}(k) = \underline{C}(k)\underline{x}(k).$$

Die Abbildungsmatrix $\underline{C}(k)$ ist ebenfalls i.A. vom Rekursionsschritt abhängig. Zur vollständigen Beschreibung der Rekursion für $k > 0$ muß der Anfangszustand $\underline{x}(0)$ bekannt sein.

Aufgabe des Kalman-Filters ist es, im $n$-ten Rekursionsschritt einen Schätzwert für den Zustandsvektor $\underline{x}(n+1)$ zu ermitteln, wobei dem Filter nur gestörte Versionen der Ausgabevektoren $\underline{y}(0)..., \underline{y}(n)$ bekannt sind. Diese gestörten Versionen werden mit $\underline{z}(k)$ bezeichnet und es sei vorausgesetzt, daß sie sich additiv aus den Ausgabevektoren $\underline{y}(k)$ und Störvektoren $\underline{v}(k)$ zusammensetzen, d.h.

$$\underline{z}(k) = \underline{y}(k) + \underline{v}(k) = \underline{C}(k)\underline{x}(k) + \underline{v}(k). \tag{7}$$

Durch die Gleichungen (6) und (7) ist das Modell vollständig beschrieben.

Die Theorie der Kalman-Filter beruht auf den Annahmen, daß die Steuervektoren und Störvektoren mittelwertfreie Zufallsprozesse sind, wobei die Vektoren bei unterschiedlichen Rekursionsschritten unkorreliert sind, d.h.

$$\langle \underline{u}(k) \rangle = \langle \underline{v}(k) \rangle = \underline{0}$$

$$\langle \underline{u}(k)u^\star(l) \rangle = \underline{U}(k)\delta_{kl}$$

$$\langle \underline{v}(k)\underline{v}^\star(l) \rangle = \underline{V}(k)\delta_{kl}.$$

Der hochgestellte * bedeutet dabei Konjugieren und Transponieren des gekennzeichneten Vektors (bzw. Matrix). Die Matrizen $\underline{U}(k)$ und $\underline{V}(k)$ beschreiben die Korrelationen der Komponenten der Vektoren $\underline{u}(k)$ und $\underline{v}(k)$. $\hat{\underline{x}}(k)$ sei der Schätzwert für $\underline{x}(k)$ beim $(k-1)$-ten Rekursionsschritt. Ferner sei

$$\underline{E}(k) = \langle [\hat{\underline{x}}(k) - \underline{x}(k)][\hat{\underline{x}}(k) - \underline{x}(k)]^\star \rangle$$

die Autokorrelationsmatrix des Schätzfehlers. Das Kalman-Filter kann jetzt durch den folgenden rekursiven Algorithmus beschrieben werden.

$$\underline{P}(k) = \underline{A}(k)\underline{E}(k)C^\star(k)[\underline{V}(k) + \underline{C}(k)\underline{E}(k)\underline{C}^\star(k)]^{-1} \tag{8}$$

$$\hat{\underline{x}}(k+1) = [\underline{A}(k) - \underline{P}(k)\underline{C}(k)]\hat{\underline{x}}(k) + \underline{P}(k)\underline{z}(k) \tag{9}$$

$$\underline{E}(k+1) = [\underline{A}(k) - \underline{P}(k)\underline{C}(k)]\underline{E}(k)[\underline{A}(k) - \underline{P}(k)\underline{C}(k)]^*$$

$$+ \underline{P}(k)\underline{V}(k)\underline{P}^*(k) + \underline{B}(k)\underline{U}(k)B^*(k). \tag{10}$$

Die erste dieser Gleichungen ist keine Rekursionsgleichung, mit ihr wird nur die Hilfgröße $\underline{P}(k)$ berechnet. Die eigentliche Rekursion bezieht sich auf den Schätzwert $\hat{\underline{x}}(k)$ für den Zustandsvektor $\underline{x}(k)$ sowie die Fehlerkorrelationsmatrix $\underline{E}(k)$. Für diese beiden Größen müssen daher geeignete Startwerte $\hat{\underline{x}}(0)$ und $\underline{E}(0)$ gefunden werden.

Das erfindungsgemäße Verfahren ergibt sich nun durch Anwendung dieser drei Gleichungen auf ein geeignetes Modell für die Kanalstoßantwortadaption. Der Burst wird, wie im Abschnitt 2.2 beschrieben, in $2N + 1$ Sektoren $A_i$, $i = -N,...,+N$, eingeteilt, wobei hier vorausgesetzt werden soll, daß alle Sektoren die gleiche Länge haben, d.h. je aus $M$ Signalabtastwerten bestehen. Es wird angenommen, daß der Sektor $A_0$ vollständig in der Testsequenz liegt; mit der Schätzung der Kanalstoßantwort aus der Testsequenz ist damit die Kanalstoßantwort für diesen Sektor bekannt. Die Sendesignalabtastwerte des $i$-ten Sektors sind $s(iM),...,s((i+1)M-1)$, die dazugehörigen Empfangssignalabtastwerte $r(iM),...,r((i+1)M-1)$ und die Rauschabtastwerte $n(iM),...,n((i+1)M-1)$. Diese Abtastwerte können zu den Vektoren $\underline{s}_i$, $\underline{r}_i$ und $\underline{n}_i$ zusammengefaßt werden. Ferner sei angenommen, daß die Kanalstoßantwort innerhalb eines Sektors konstant ist. Diese Annahme trifft desto genauer zu, je kleiner die Sektoren, d.h. je kleiner $M$, die Anzahl der Signalabtastwerte pro Sektor, ist. Der Kanalstoßantwortvektor des $i$-ten Sektors wird nun mit $\underline{h}_i$, $i = -N,...,+N$, bezeichnet.

Der generelle Ablauf der Bearbeitung eines Bursts ist durch folgende Punkte charakterisiert.

- Ein Burst wird in $2N$ Schritten bearbeitet, wobei im $k$-ten Schritt der Sektor $A_i$ detektiert wird, der von der zuverlässigkeitsgesteuerten Datendetektion dafür vorgesehen ist [5].
- Jedem Sektor $A_i$ wird beim $k$-ten Schritt eine geschätzte Kanalstoßantwort $\hat{\underline{h}}_i(k)$ zugewiesen; für die Detektion des Sektors wird dieser Kanalstoßantwortschätzwert verwendet. Zur Notation: der Index $i$ bezeichnet den zu bearbeitenden Sektor, die geklammerte Variable $k$ bezeichnet den Bearbeitungsschritt. $\hat{\underline{h}}_i(k)$ ist also die geschätzte Kanalstoßantwort für den $i$-ten Sektor, wie sie sich im $k$-ten Bearbeitungsschritt ergibt. Die $l$-te Komponente eines Vektors $\underline{x}$ wird mit $x(l)$ bezeichnet. Theoretisch kann sich daraus die Möglichkeit zur Verwechslung von Bearbeitungsschritt und Komponente ergeben. Was jeweils gemeint ist, ergibt sich jedoch klar aus dem Zusammenhang.
- Nach der Detektion des Sektors $A_i$ im $k$-ten Schritt können die Sendesignalabtastwerte dieses Sektors rekonstruiert werden; präziser ausgedrückt muß die Detektion so ausgeführt werden, daß die Sendesignalabtastwerte $s(iM - L +1),...,s((i+1)M-1)$ rekonstruiert werden können. Mit diesen Abtastwerten läßt sich nun die Matrix

$$\underline{S}_i = \begin{pmatrix} s(iM) & \dots & s(iM - L + 1) \\ \vdots & \ddots & \vdots \\ s((i+1)M - 1) & \dots & s((i+1)M - L) \end{pmatrix} \tag{11}$$

der Dimension $M \times L$ erstellen.
- Mit dieser Matrix kann, wie noch gezeigt wird, ein Rekursionsschritt des Kalman-Filters durchgerechnet werden, der die Kanalstoßantworten *aller* Sektoren aufdatiert.
- Nicht nur für die Kalman-Rekursion, sondern auch für die Detektion des ersten Sektors benötigt man einen Startwert für die Kanalstoßantwort. Dieser, der im folgenden mit $\hat{\underline{h}}$ bezeichnet werden soll, kann mit Hilfe der in jedem Burst vorhandenen Testsequenz gewonnen werden. Dieser Schätzwert wird zunächst allen Sektoren zugewiesen; d.h. für alle $i$ gilt $\hat{\underline{h}}_i(0) = \underline{h}$.

Als Zustandsvektor definiert man nun

$$\underline{x}(k) = (\underline{h}_{-N}^T,...,\underline{h}_{+N}^T)^T, \tag{12}$$

also die Aneinanderkettung der zu schätzenden Kanalstoßantworten aller Sektoren. Dieser Zustandsvektor ändert sich natürlich nicht mit $k$. Aus (6) folgt damit sofort

$$\underline{A}(k) = \underline{I}$$

$$\underline{B}(k) = \underline{0}$$

$$\underline{u}(k) = \underline{0},$$

wobei $\underline{I}$ die Einheitsmatrix ist. Damit sind alle Größen der ersten Modellgleichung (6) gefunden. Die Größen der zweiten Modellgleichung (7) findet man, indem man (11) in (1) einsetzt; für den $i$-ten Sektor erhält man

$$\underline{r}_i = \underline{S}_i \underline{h}_i + \underline{n}_i \qquad (13)$$

Definiert man jetzt

$$\underline{z}(k) = \underline{r}_i$$

$$\underline{v}(k) = \underline{n}_i$$

sowie

$$C(k) = (\ \underbrace{\underline{0},\ldots,\underline{0}}_{\substack{N+i\ 0-\text{Matrizen} \\ \text{der Dimension} \\ M\times L}}\ ,\underline{S}_i,\ \underbrace{\underline{0},\ldots,\underline{0}}_{\substack{N-i\ 0-\text{Matrizen} \\ \text{der Dimension} \\ M\times L}}\ ),$$

dann wird aus (13) gerade (7). Damit ist das Modell vollständig beschrieben. Es sei an dieser Stelle angemerkt, daß die Korrelationsmatrix des Modellrauschens $\underline{V}(k)$ gleich $\sigma^2\underline{I}$ ist, da das Modellrauschen, wie oben gesehen, gleich dem Kanalrauschen ist, dieses aber als unkorreliert mit der Varianz $\sigma^2$ angenommen wurde.

Neben dem Modell müssen noch die Anfangswerte $\underline{x}(0)$, $\underline{\hat{x}}(0)$ und $\underline{E}(0)$ festgelegt werden. $\underline{x}(0)$ ergibt sich trivialerweise aus (12). $\underline{\hat{x}}(0)$ erhält man, wie bereits oben beschrieben, indem man den Kanalstoßantwortschätzwert $\underline{\hat{h}}$ aus der Testsequenz allen Sektoren zuweist. Es ist also

$$\underline{\hat{x}}(0) = (\underline{\hat{h}}^T,\ldots,\underline{\hat{h}}^T)^T\ .$$

Der Startwert für die Fehlerkorrelationsmatrix läßt sich jetzt aus $\underline{x}(0)$ und $\underline{\hat{x}}(0)$ berechnen.

$$\underline{E}(0) = \langle[\underline{\hat{x}}(0) - x(0)][\underline{\hat{x}}(0) - x(0)]^*\rangle$$

$$=\langle\underline{\hat{x}}(0)\underline{\hat{x}}^*(0)\rangle + \langle\underline{x}(0)\underline{x}^*(0)\rangle - \langle\underline{x}(0)\underline{\hat{x}}^*(0)\rangle - \langle\underline{\hat{x}}(0)\underline{x}^*(0)\rangle.$$

Diese Matrix hat die Dimension $(2N+1)L \times (2N+1)L$, ihre Elemente seien im folgenden $e_{Li+l,Li'+l'}(0)$,$-N \leq i,i' \leq +N$, $0 \leq l,l' \leq L - 1$, notiert. Es ist

$$e_{Li+l,Li'+l'}(0) = \langle\hat{h}(l)\hat{h}^*(l')\rangle + \langle h_i(l)h_i^*(l')\rangle - \langle h_i(l)\hat{h}^*(l')\rangle - \langle\hat{h}(l)h_i^*(l')\rangle.$$

Sind die Testsequenzen geeignet gewählt, dann gilt

$$\hat{h}(l) = h_0(l) + n_h(l),$$

wobei $n_h(l)$ eine von $h_o(l)$ unabhängige, gaußverteilte, mittelwertfreie Zufallsvariable mit

$$\langle n_h(l) n^*_h(l') \rangle = \sigma^2_h \delta_{ll'}$$

ist. Diese Annahme gilt in praktischen Anwendungen zumindest in guter Näherung. Es folgt

$$e_{Li+l,Li'+l'}(0) = \langle h_0(l) h^*_0(l') \rangle + \sigma^2_h \delta_{ll'} + \langle h_i(l) h^*_{i'}(l') \rangle x$$

$$- \langle h_i(l) h^*_0(l') \rangle - \langle h_0(l) h^*_{i'}(l') \rangle.$$

Mit der formalen Notation

$$\phi_{hh}(l,l',i,i') = \langle h_i(l) h^*_{i'}(l') \rangle$$

erhält man

$$e_{Li+l,Li'+l'}(0) = \phi_{hh}(l,l',0,0) + \sigma^2_h \delta_{ll'} + \phi_{hh}(l,l',i,i')$$

$$- \phi_{hh}(l,l',i,0) - \phi_{hh}(l,l',0,i').$$

Die $\phi_{hh}(l,l',i,i')$ sind nur von den Eigenschaften des Übertragungskanales abhängig. Wie diese im Empfänger ermittelt werden können, folgt weiter unten.

Der Adaptionsalgorithmus kann jetzt wie folgt zusammengefaßt werden.

- Der empfangene Burst wird in $2N + 1$ Sektoren $A_{-N},..., A_{+N}$ zu je $M$ Signalabtastwerten aufgeteilt. Es wird angenommen, daß die Kanalstoßantwort innerhalb eines Sektors konstant ist.

- Man definiert einen Vektor $\hat{\underline{x}}$ der Dimension $(2N +1)L$, dessen Inhalt zu jedem Zeitpunkt die geschätzten Kanalstoßantworten der einzelnen Sektoren sind. Für die Detektion des i-ten Sektors verwendet man als Kanalstoßantwort die Komponenten $\hat{x}(iL),...,\hat{x}((i + 1)L - 1)$ dieses Vektors. Vor Beginn der Detektion initialisiert man $\hat{x}(iL + l)$ mit $\hat{h}(l)$, der $l$-ten Komponente der aus der Testsequenz geschätzten Kanalstoßantwort.

- Man definiert eine Matrix $\underline{E}$ der Dimension $(2N +1)L \times (2N +1)L$, deren $(iL + l, i'L + l')$ - tes Element vor Beginn der Detektion mit

$$e_{Li+l,Li'+l'}(0) = \phi_{hh}(l, l', 0,0) + \sigma^2_h \delta_{ll'} + \phi_{hh}(l,l',i,i')$$

$$- \phi_{hh}(l,l',i,0) - \phi_{hh}(l,l',0,i').$$

initialisiert wird, wobei

$$\phi_{hh}(l,l',i,i') = \langle h_i(l) h^*_{i'}(l') \rangle,$$

die Korrelation der $l$-ten Komponente der Kanalstoßantwort im Sektor $A_i$ und der $l'$-ten Komponente der Kanalstoßantwort im Sektor $A_{i'}$ sowie $\sigma^2_h$ die Varianz des Fehlers bei der Schätzung der Kanalstoßantwortkoeffizienten aus dem Testsignal ist. $\underline{E}_i$ sei eine Matrix der Dimension $(2N + 1)L \times L$, deren Spalten nach der Detektion des $i$-ten Sektors die Spalten $iL,...,(i + 1)L - 1$ der Matrix $\underline{E}$ sind. Ferner sei $\underline{E}_{ii}$ eine Matrix der Dimension $L \times L$, deren Zeilen nach der Detektion des $i$-ten Sektors die Zeilen $iL,...,(i + 1)L - 1$ der Matrix $\underline{E}_i$ sind.

- Man definiert eine Matrix $\underline{S}$ der Dimension $M \times L$, deren $(m,l)$ - te Stelle nach der Detektion des $i$-ten Sektors mit dem rekonstruierten Sendesignalabtastwert $s(iM + m - l)$ belegt wird.

- Man definiert einen Vektor $\hat{\underline{x}}_i$ der Dimension $L$, dessen Elemente nach der Detektion des $i$-ten Sektors gleich den Elementen $iL,...,(i+1)L-1$ von $\hat{\underline{x}}$ sind sowie den Vektor $\underline{d}$, der nach der Detektion des $i$-ten Sektors

$$\underline{d} = \underline{r}_i - \underline{S}\hat{\underline{x}}_i$$

ist, wobei $\underline{r}_i$ ein Vektor der Dimension $M$ ist und die zum $i$-ten Sektor $A_i$ gehörenden Empfangssignalabtastwerte enthält.

- Nach der Detektion des $i$-ten Sektors berechnet man nun

$$\underline{P} = \underline{E}_i\underline{S}^* \, [\sigma^2\underline{I} + \underline{SE}_{ii}\underline{S}^*]^{-1}$$

sowie die Rekursionen

$$\hat{\underline{x}} := \hat{\underline{x}} + \underline{P}d$$

$$\underline{E} := \underline{E} + \underline{PSE}_i^*.$$

Diese Rekursionen ergeben sich nach trivialen Umformungen der allgemeinen Gleichungen (8), (9) und (10) unter Berücksichtigung der Modellparameter.

Der besondere Vorteil dieses Algorithmus ist darin begründet, daß bei jedem Rekursionsschritt die Kanalstoßantworten *aller* Sektoren aufdatiert werden. Die $k$-te Rekursion der Kanalstoßantwort im Sektor $A_i$ hängt dabei von den Kanalstoßantworten *aller* Sektoren im Rekursionsschritt $k$ - 1 ab. Daraus resultiert die Fähigkeit des Algorithmus durch Fading-Einbrüche hindurch zu adaptieren.

Der Algorithmus benötigt, wie oben dargelegt, zu seiner optimalen Funktion die Kenntnis der Kanalkorrelationseigenschaften

$$\phi_{hh}(l,l',i,i') = \langle h_i(l)\, h_i^*(l') \rangle.$$

Es zeigt sich jedoch, daß der Algorithmus auch dann befriedigend arbeitet, wenn man statt der obigen $\phi_{hh}(l,l',i,i')$ völlig andere, aber physikalisch sinnvoll gewählte, Werte zur Initialisierung der Fehlerkorrelationsmatrix wählt. $\phi_{hh}(l,l',i,i')$ hängt i.A. von der Dopplerfrequenz

$$f_d = f_0\, \frac{v}{c}$$

(also letztendlich von der Fahrzeuggeschwindigkeit und der Trägerfrequenz) und den Einfallswinkeln der empfangenen Strahlungskomponenten bezogen auf die Bewegungsrichtung des mobilen Teilnehmers ab. Eine physikalisch sinnvolle Initialisierung der Fehlerkorrelationsmatrix erhält man, indem man $\phi_{hh}(l,l',i,i')$ für die worst case Situation abschätzt und diese Werte für die Initialisierung verwendet.

Eine andere Möglichkeit besteht darin, im Empfänger Schätzwerte für die $\phi_{hh}(l,l',i,i')$ zu berechnen. Zu diesem Zweck startet man zu Beginn des Empfangsprozesses mit der obigen worst case Abschätzung für die $\phi_{hh}(l,l',i,i')$. Nach der kompletten Detektion eines Bursts stehen für alle Sektoren Schätzwerte für die Kanalstoßantworten $\underline{h}_i$ zur Verfügung und zwar ist $\hat{x}(iL + l)$, die $(iL + l)$ - te Komponente des geschätzten Zustandsvektors $\underline{\hat{x}}$ (nach dem letzten Schritt der Kanalstoßantwortadaption), ein geeigneter Schätzwert für $h_i(l)$. Einen geeigneten Schätzwert für $\phi_{hh}(l,l',i,i')$ erhält man nun, indem man $\hat{x}(iL + l)x^*(i'L + l')$ über die Zeit mittelt.

## Literatur

[1] B. Widrow, J.M. McCool, M.G. Larimore, C.R. Johnson, "Stationary and Nonstationary Learning Characteristics of the LMS Adaptive Filter", Proceedings of the IEEE, vol. 64, no. 8, pp. 1151-1162, 1976.

[2] E. Eleftheriou, D.D. Falconer, "Tracking Properties and Steady-State Performance of RLS Adaptive Filter Algorithms, IEE Transactions on Acoustic, Speech and Signal Processing, vol. ASSP-34, no. 5, pp. 1097-1110, 1986.

[3] R.E. Kalman "A Nwe Approach to Linear Filtering and Prediction Problems", Trans. ASME, Series D, Journal of Basic Engineering, vol. 82, 1960, pp. 35-45.

[4] P.A. Bello, "Characterization of Randomly Time-Variant Linear Channels", IEEE Transactions on Communications Systems, vol. CS-11, pp. 360-393, 1963

[5] F.J. Hagmanns, "Zuverlässigkeitsgesteuerte Datendetektion in Empfängern für TDMA-Mobilfunksysteme, Patentanmeldung entsprechend der Deutschen Patentschrift DE-C 43 11 604 (internationale Patentanmeldung PCT/DE 94/00308).

**Patentansprüche**

1. Verfahren zur Adaption der zeitveränderlichen Kanalstoßantwort während eines Bursts in Empfängern für TDMA-Mobilfunksysteme, wobei jeder Burst in der Mitte zwischen zwei Datenabschnitten eine dem Empfänger bekannte Testsequenz enthält, mit der eine initiale Schätzung der Kanalstoßantwort möglich ist, dadurch gekennzeichnet, daß

- das Empfangssignal eines Bursts abgetastet wird,

- der empfangene Burst derart in $2N + 1$ Sektoren $A_{-N},..., A_{+N}$ unterteilt wird, daß die Kanalstoßantwort innerhalb eines Sektors als konstant angesehen werden kann,

- ein Vektor $\hat{\underline{x}}$ der Dimension $(2N + 1)L$ definiert wird, wobei $L$ die Anzahl der Kanalstoßantwortkoeffizienten ist und die $(iL + l)$-te Komponente von $\underline{\hat{x}}$, $-N \leq i \leq +N$, $0 \leq l \leq L-1$, vor Beginn der Detektion mit dem $l$-ten Koeffizienten des aus der Testsequenz gewonnenen Kanalstoßantwortschätzwertes initialisiert wird,

- eine Matrix $\underline{E}$ der Dimension $(2N + 1)L \times (2N + 1)L$ definiert wird, deren $(iL + l, i'L + l')$-tes Element mit

$$e_{Li+l,Li+l'}(0) = \phi_{hh}(l,l',0,0) + \sigma_h^2 \delta_{ll'} + \phi_{hh}(l,l',i,i')$$

$$- \phi_{hh}(l,l',i,0) - \phi_{hh}(l,l',0,i')$$

initialisiert wird, wobei idealerweise

$$\phi_{hh}(l.l',i,i') = \langle h_i(l)h_i^*(l')\rangle,$$

die Korrelation der $l$-ten Komponente der Kanalstoßantwort im Sektor $A_i$ und der $l'$-ten Komponente der kanalstoßantwort im Sektor $A_{i'}$ sowie $\sigma_h^2$ die Varianz des Fehlers bei der Schätzung der Kanalstoßantwortkoeffizienten aus dem Testsignal ist,

- eine Matrix $\underline{E}_i$ der Dimension $(2N + 1)L \times L$ definiert wird, deren Spalten nach der Detektion des $i$-ten Sektors die Spalten $iL,...,(i+1)L-1$ der Matrix $\underline{E}$ sind,

- eine Matrix $\underline{E}_{ii}$ der Dimension $L \times L$ definert wird, deren Zeilen nach der Detektion des $i$-ten Sektors die Zeilen $iL,..., (i+1)L-1$ der Matrix $\underline{E}_i$ sind,

- eine Matrix $\underline{S}$ der Dimension $M \times L$ definiert wird, deren $(m, l)$-te Stelle nach der Detektion des $i$-ten Sektors mit dem rekonsturierten Sendesignalabtastwert $s(iM + m - l)$ belegt wird,

- ein Vektor $\underline{\hat{x}}_i$ der Dimension $L$ definiert wird, dessen Elemente nach der Detektion des $i$-ten Sektors gleich den Elementen $iL,...,(i + 1)L-1$ von $\underline{\hat{x}}$ sind,

- ein Vektor $\underline{d}$ der Dimension $M$ definiert wird, der nach der Detektion des $i$-ten Sektors

$$\underline{d} = \underline{r}_i - \underline{S}\underline{\hat{x}}_i$$

ist, wobei $\underline{r}_i$ ein Vektor der Dimension M ist und die zum i-ten Sektor $A_i$ gehörenden Empfangssignalabtastwerte enthält,

- jeder Burst in 2N Schritten verarbeitet wird, wobei

- im k-ten Schritt der i-te Sektor unter Verwendung der Komponenten iL,...,(i + 1)L-1 des Vektors $\underline{\hat{x}}$ detektiert wird, wobei der Sektor $A_i$ nach einem Verfahren ausgewählt wird, mit dem zunächst alle Datenabschnitte, die nicht von einem Fading-Einbruch betroffen sind, zur Detektion vorgesehen werden, bevor ein betroffener Datenabschnitt bearbeitet wird,

- die Matrix

$$\underline{P} = \underline{E}_i\underline{S}^*[\sigma^2\underline{I}+\underline{SE}_{ii}\underline{S}^*]^{-1}$$

berechnet wird,

- sowie die Rekursionen

$$\underline{\hat{x}} := \underline{\hat{x}} + \underline{P}d$$

$$\underline{E} := \underline{E} + \underline{PSE}_i^*$$

ausgeführt werden.

## Claims

1. A method for adaptation of the time-variable channel impulse response during a burst in receivers for TDMA mobile radio systems, each burst including in the center between two data regions a test sequence which is known to the receiver and by means of which an initial estimate of the channel impulse response is possible, wherein

   - the received signal of a burst is sampled,
   - the received burst is divided into 2N + 1 sectors $A_{-N},...A_{+N}$, in such a manner that the channel impulse response can be regarded as being constant within a sector,
   - a vector $\underline{\hat{x}}$ of dimension (2N+1)L is defined, L being the number of channel impulse response coefficients and the (iL+l)-th component of $\underline{\hat{x}}$, $-N \leq i \leq +N$, $0 \leq l \leq L-1$ is initialized before the start of the detection using the l-th coefficient of the estimated value of the channel impulse response obtained from the test sequence,
   - a matrix $\underline{E}$ of dimension $(2N+1)L \times (2N+1)L$ is defined, whose (iL+l,i'L+l')-th element is initialized using

   $$e_{Li+l,Li+l'}(0) = \phi_{hh}(l,l',0,0) + \sigma_h^2\delta_{ll'} + \phi_{hh}(l,l',i,i')$$
   $$- \phi_{hh}(l,l',i,0) - \phi_{hh}(l,l',0,i')$$

   where ideally

   $$\phi_{hh}(l.l',i,i') = \langle h_i(l)\,h_{i'}^*(l')\rangle,$$

   is the correlation of the l-th component of the channel impulse response in the sector $A_i$ and the l'-th component of the channel impulse response in the sector $A_{i'}$, and $\sigma^2_h$ is the variance of the error in the estimate of the channel impulse response coefficients from the test signal,
   - a matrix $\underline{E}_i$ of dimension $(2N+1)L \times L$ is defined, whose columns, after the detection of the i-th sector, are the columns iL,...,(i+1)L-1 of the matrix $\underline{E}$,
   - a matrix $\underline{E}_{ii}$ of dimension $L \times L$ is defined, whose lines, after the detection of the i-th sector, are the lines iL,...,

(i+1)L-1 of the matrix $\underline{E}_i$,

- a matrix $\underline{S}$ of dimension M × L is defined, whose (m,l)-th digit, after detection of the i-th sector, is occupied by reconstructed transmitted signal sample s(iM+m-l),
- a vector $\underline{\hat{x}}_i$ of dimension L is defined, whose elements, after detection of the i-th sector, are equal to the elements iL,...,(i+1)L-1 of $\underline{\hat{x}}$,
- a vector $\underline{d}$ of dimension M is defined which, after the detection of the i-th sector, is

$$\underline{d} = \underline{r}_i - \underline{S}\underline{\hat{x}}_i$$

where $\underline{r}_i$ is a vector of dimension M and contains the received signal samples associated with the i-th sector $A_i$,
- each burst is processed in 2N steps, where
- in the k-th step, the i-th sector is detected using the components iL,...,(i+l)L-1 of the vector $\underline{\hat{x}}$, the sector $A_i$ being selected by a method by means of which, initially, all the data sections which are not affected by a fading incursion are provided for detection before an affected data section is processed,
- the matrix

$$\underline{P} = \underline{E}_i\underline{S}^*[\sigma^2\underline{I} + \underline{S}\underline{E}_{ii}\underline{S}^*]^{-1}$$

is calculated,
- and the recursions

$$\underline{\hat{x}} := \underline{\hat{x}} + \underline{P}\underline{d}$$

$$\underline{E} := \underline{E} + \underline{P}\underline{S}\underline{E}^*_i$$

are carried out.


## Revendications

1. Procédé d'adaptation d'une réponse impulsionnelle de voie variable dans le temps pendant une salve dans les récepteurs pour des systèmes de radiotéléphones mobiles AMRT,
   chaque salve contenant au milieu entre deux segments de données, une séquence de contrôle connue du récepteur, qui permet une évaluation initiale de la réponse impulsionnelle de voie,
   caractérisé en ce que

   - on détecte le signal reçu d'une salve,
   - on subdivise la salve reçue en (2N + l) secteurs $A_{-N}$... $A_{+N}$, pour que la réponse impulsionnelle de voie à l'intérieur d'un secteur puisse être considérée comme constante,
   - on définit un vecteur $\underline{\hat{x}}$ de dimension (2N + 1)L, L étant le nombre de coefficients de la réponse impulsionnelle de voie et la composante d'ordre (iL + l) de $\underline{\hat{x}}$, avec $-N \le 1 \le +N$, $0 \le 1 \le L-1$, est initialisée avant le début de la détection par le coefficient d'ordre (I) de la valeur évaluée de la réponse impulsionnelle de voie obtenue à partir de la séquence de contrôle,
   - on définit une matrice $\underline{E}$ de dimensions (2N + 1)L x (2N + l)L dont l'élément de coordonnées (iL + l, i'L + l') est initialisé par :

$$e_{Li+l,Li+l'}(0) = \phi_{hh}(l,l',0,0) + \sigma_h^2\delta_{ll'} + \phi_{hh}(l,l',i,i')$$

$$- \phi_{hh}(l,l',i,0) - \phi_{hh}(l,l',0,i')$$

avec de manière idéale :

$$\phi_{hh}(l.l',i,i') = \langle h_i(l)\, h_{i'}^{*}(l') \rangle,$$

qui est la corrélation de la composante d'ordre (l) de la réponse impulsionnelle de voie dans le secteur $A_i$ et de la composante (l') de la réponse impulsionnelle de voie dans le secteur $A_{i'}$, et $\sigma_h^2$ est la variance de l'erreur d'évaluation des coefficients de réponse impulsionnelle de voie du signal de contrôle,

- on définit une matrice $\underline{E}_i$ de dimensions (2N + 1)LxL dont les colonnes après détection du secteur d'ordre (i) sont les colonnes d'ordre iL,...,(i+l)L-1 de la matrice $\underline{E}$,
- on définit une matrice $\underline{E}_{ii}$ de dimensions L x L dont les lignes après détection du secteur d'ordre (i) sont les lignes iL,...,(i+l)L-l de la matrice $\underline{E}_i$,
- on définit une matrice $\underline{S}$ de dimensions M x L dont l'emplacement (m, l) après détection du vecteur (i) est constitué par la valeur de détection du signal d'émission reconstruit s(iM + m - l),
- on définit un vecteur $\hat{\underline{x}}_i$ de dimension L dont les éléments après détection du secteur d'ordre (i) sont égaux aux éléments iL,...,(i + l)L-l du vecteur $\hat{\underline{x}}$,
- on définit un vecteur $\underline{d}$ de dimension M qui après détection du secteur d'ordre (i) est le suivant :

$$\underline{d} = \underline{r}_i - \underline{S}\hat{\underline{x}}_i$$

avec $\underline{r}_i$ représentant un vecteur de dimension M et contient les valeurs de détection du signal de réception appartenant au secteur $A_i$ d'ordre (i),
- on traite chaque salve en 2N opérations avec,
- détection dans l'étape d'ordre (k) du secteur (i) en utilisant les composantes iL,...,(i + 1)L-1 du vecteur $\hat{\ }$,
- le secteur $A_i$ étant sélectionné selon un procédé qui concerne tout d'abord tous les segments de données non concernés par l'incursion d'évanouissement pour la détection avant de traiter un segment de données concerné,
- on calcule la matrice

$$\underline{P} = \underline{E}_i \underline{S}^*[\sigma^2 \underline{I} + \underline{S}\underline{E}_{ii}\underline{S}^*]^{-1}$$

- et on effectue les récurrences :

$$\hat{\underline{x}} := \hat{\underline{x}} + \underline{P}\underline{d}$$

$$\underline{E} := \underline{E} + \underline{P}\underline{S}\underline{E}_i^*$$

Bild 1: TDMA-Burst im GSM-System

3 Tail-bits | 58 Datenbits | 26 Testbits | 58 Datenbits | 3 Tail-bits

Bild 2: Blockschaltbild der Übertragungsstrecke

Bild 3: Sektorisierung des TDMA-Bursts

Bild 4: FADING-EINBRUCH IN EINEM TDMA-BURST

Bild 5: PROZESSMODELL FÜR KALMAN-THEORIE